# EUROPÄISCHE PATENTSCHRIFT

(11) **EP 0 660 768 B1**
(45) Veröffentlichungstag und Bekanntmachung des Hinweises auf die Patenterteilung: **04.12.1996**
(21) Anmeldenummer: 93919185.4
(22) Anmeldetag: 26.08.1993
(51) Int. Cl.: B23K 1/20

(54) **VERFAHREN ZUM BELOTEN EINER METALLISCHEN STRUKTUR, INSBESONDERE VON TEILBEREICHEN EINES WABENKÖRPERS**
PROCESS FOR SOLDERING A METALLIC STRUCTURE, IN PARTICULAR PARTIAL AREAS OF A HONEYCOMBED BODY
PROCEDE POUR SOUDER UNE STRUCTURE METALLIQUE, NOTAMMENT DES ZONES PARTIELLES D'UN CORPS ALVEOLAIRE

(30) Priorität: 18.09.1992 DE 4231338
(43) Veröffentlichungstag der Anmeldung: 05.07.1995
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9302303
(87) Internationale Veröffentlichungsnummer: WO9406594

(56) Entgegenhaltungen:
- EP-A- 0 049 489
- EP-A- 0 416 758
- EP-A- 0 469 973
- DE-A- 3 904 743
- US-A- 4 172 547

## Beschreibung

Die vorliegende Erfindung betrifft ein Verfahren zum Beloten von Teilbereichen einer metallischen Struktur, insbesondere eines metallischen Wabenkörpers. Besonderes Anwendungsgebiet ist das Beloten der Innenseiten eines Mantelrohres für einen metallischen Wabenkörper, der z. B. als Trägerkörper für katalytisch aktives Material zum Einsatz in der Abgasreinigung bei Kraftfahrzeugen gebraucht wird. Auch andere Anwendungen bei vergleichbar feinen Blechstrukturen, wie z. B. in Wärmetauschern, sind möglich.

Aus der EP-B-0 049 489 ist bereits ein Verfahren zum Beloten von metallischen Strukturen bekannt, bei dem ein Haftkleber aufgebracht und anschließend mit Lötpulver beaufschlagt wird. Dieser Haftkleber bleibt auch nach dem Trocknen haftfähig und soll bei Löttemperatur rückstandsfrei verdampfen. Mit Hilfe eines solchen Klebers kann eine dünne, praktisch monopartikulare Schicht aufgebracht werden, so daß über die Korngröße der verwendeten Lötkörner recht genau die Menge des aufzubringenden Lotes dosiert werden kann. Weitere Aussagen über das Verhalten des Haftklebers bei erhöhter Temperatur, wie sie bei einer thermischen Behandlung der Struktur auftreten könnte, enthält diese Schrift nicht.

Aus der DE-A-38 18 512 sind verschiedene Belotungsverfahren mit ihren unterschiedlichen Vor- und Nachteilen bekannt. Diese Schrift enthält einen Überblick über die bis dahin bekannten Lotungsverfahren für Wabenkörper und ähnliche Strukturen. Auch hier wird jedoch keine Aussage über die Eigenschaften der verwendeten Kleber oder Binder bei erhöhter Temperatur gemacht.

Aus der US-PS 4,795,615 ist es auch bekannt, bei einem metallischen Wabenkörper, der ein Mantelrohr aufweist, die Anbindung der eigentlichen Wabenstruktur an das Mantelrohr in einem streifenförmigen, etwa in Umfangsrichtung verlaufenden Bereich vorzunehmen, beispielsweise durch Einlegen einer Lötfolie. Das Einlegen einer Lötfolie ist jedoch nicht für alle Anwendungsfälle geeignet, da eine Lötfolie beispielsweise verschoben oder verformt wird, wenn eine Wabenstruktur in ein Mantelrohr hineingeschoben wird.

Bei komplexeren Bauteilen, beispielsweise Katalysator-Trägerkörpern oder Wärmetauschern, sind oft mehrere Herstellungsschritte erforderlich bevor der gewünschte Körper vollständig zusammengesetzt und belotet ist. Die auftretenden Probleme seien anhand eines metallischen Wabenkörpers mit Mantelrohr erläutert:

Um die feinen Strukturen der für einen Wabenkörper verwendeten Bleche herstellen und verarbeiten zu können, ist es vorteilhaft, wenn die Bleche mit einem Walzöl beschichtet sind, welches Mineralstoffe, Fettstoffe und Hilfsstoffe enthalten kann. Ein solches Walzöl muß jedoch vor einem Beloten der aus den Blechen hergestellten Struktur zumindest teilweise entfernt werden, was durch eine thermische Behandlung geschehen kann. Besonders praktisch ist es allerdings, wenn diese thermische Behandlung bereits an dem in seiner Form vollständig hergestellten Wabenkörper mit Mantelrohr erfolgen kann. d. h. die noch mit einer Ölschicht versehenen Blechstrukturen müssen zunächst in ein geeignetes Mantelrohr eingesetzt werden. Da die zu verlötenden Bereiche zwischen Mantelrohr und Wabenstruktur später nicht mehr mit Lot versehen werden können, müssen zu diesem Zeitpunkt bereits die gewünschten Teilbereiche im Inneren des Mantelrohres belotet sein. Wenn dies in an sich bekannter Weise mittels eines klebrigen Materials und Lotpulver erfolgen soll, so ist es notwendig, daß das Lotpulver auch bei und nach einer thermischen Behandlung in den gewünschten Bereichen haften bleibt. Ähnliche Probleme treten auch bei anderen Wabenstrukturen auf, in denen bestimmte Teile schon vor dem Zusammensetzen belotet werden müssen, andere Teile jedoch erst später.

Aufgabe der vorliegenden Erfindung ist daher, einen Belotungsprozeß anzugeben, welcher die gezielte und thermisch stabile Belotung von Teilbereichen einer metallischen Struktur ermöglicht, ohne daß das aufgebrachte Lot bei späterer thermischer Behandlung oder weiteren Handhabungsschritten herausfällt.

Dieses Aufgabe wird gelöst durch ein Verfahren zum Beloten einer metallischen Struktur, wobei ein klebriges Material auf die Struktur oder Teilbereiche davon aufgetragen und anschließend Lotpulver aufgebracht wird, welches an dem klebrigen Material haften bleibt, und wobei das klebrige Material seine Haftfähigkeit bis zu Temperaturen von mindestens 180° C, vorzugsweise über 200° C, beibehält, und nach dem Auftrag des Lotpulvers aber vor dem Lötprozeß ein thermisches Entfetten nicht oder noch nicht beloteter Strukturteile, durchgeführt wird, ohne daß das Lötpulver dabei oder bei anschließenden Handhabungsschritten herausfällt.

Während es bisher praktisch nicht möglich war, komplexere Strukturen in zwei oder mehreren Arbeitsschritten zu beloten und nach einer ersten Belotung noch komplexe Arbeitsschritte mit einer thermischen Behandlung vorzunehmen, schafft die vorliegende Erfindung eine solche Möglichkeit. Dadurch können verschiedenartige Lötverbindungen in einer metallischen Struktur durch verschiedene Belotungstechniken, mit unterschiedlichen Loten bei hoher Qualität nacheinander angewendet werden. Insbesondere ist es möglich, noch mit einem Walzöl versehene Strukturen nach der Zusammensetzung eines Wabenkörpers noch thermisch zu entfetten, auch wenn in anderen Bereichen schon Lot aufgebracht ist. Dies war bisher nicht möglich, so daß erhebliche Nachteile durch die Verwendung bereits entfetteter Bleche beim Aufbau der Strukturen in Kauf genommen werden mußten.

Die Erfindung läßt sich insbesondere besonders vorteilhaft für die Verbindung des Mantelrohres eines Katalysator-Trägerkörpers mit dem übrigen Wabenkörper einsetzen. Dazu wird auf der Innenseite des Mantelrohres mindestens ein streifenförmig, etwa entlang des Innenumfanges verlaufender Bereich mit einem klebrigen Material und anschließend mit Lotpulver versehen. Der Auftrag des klebrigen Materials kann beispielsweise mit einer Filzrolle, einem offenporigen Gummi oder einer schwammartigen Vorrichtung erfolgen, wodurch sich ein solcher Prozeß auch leicht automatisieren läßt. Bei typischen Anwendungen sind solche streifenförmigen Bereiche etwa 15 mm bis 25 mm, vorzugsweise etwa 20 mm breit.

Als günstig für die Haltbarkeit und zur Bewältigung von Dehnungsproblemen hat es sich erwiesen, bei Wabenkörpern bzw. Mantelrohren mit einer axialen Länge von mehr als 90 mm mindenstens drei streifenförmige Bereiche zu beloten, bei kürzeren Mantelrohren zwei oder einen.

Da einerseits die in ein solches Mantelrohr eingesetzten Wabenstrukturen bei manchen Anwendungsfällen etwas kürzer als das Mantelrohr selbst sind, andererseits eine Verbindung zwischen Mantelrohr und Wabenstruktur nicht unbedingt direkt an den Stirnseiten erfolgen soll, ist es vorteilhaft, wenn die streifenförmigen Bereiche mit Abstand von den Stirnseiten des Mantelrohres angebracht werden.

Falls es sich bei dem klebrigen Material um eine Lösung handelt, wird dieses vor der eigentlichen thermischen Behandlung getrocknet, um leicht flüchtige Bestandteile zu entfernen. Dies vermeidet bei einer späteren schnellen Aufheizung die Blasenbildung und dadurch das Ablösen von Lotpulver.

Als geeignetes klebriges Material hat sich z. B. Polyvenylmethylether erwiesen. Dieser kann umweltschonend in einer etwa 2-6%igen wässrigen Lösung verarbeitet werden, vorzugsweise einer etwa 4%igen Lösung.

Zumindest für den beschriebenen Anwendungsfall der Katalysator-Trägerkörper eignen sich besonders Lotpulver mit Korngrößen von etwa 50 µ bis 140 µ, vorzugsweise etwa 63 µ bis 125 µ. Für die Verlötung der feinen Wabenstruktur selbst werden im allgemeinen Lote mit einem erheblichen Anteil noch kleinerer Körner benötigt, wobei solche Lotpulvermischungen mit der Zeit an kleinen Lotkörnern verarmen. Gerade die übrigbleibende Zusammensetzung an Korngrößen eignet sich besonders gut für die Innenbelotung von Mantelrohren, wodurch der gesamte Herstellungsprozeß sehr wirtschaftlich wird.

Nach dem Aufbringen des Lotpulvers können strukturierte Blechlagen in das Mantelrohr geschoben oder anderweitig eingesetzt und anschließend thermisch behandelt werden.

Was das Aufbringen des Lotpulvers angeht, so kann dieses vorzugsweise in einem Wirbelbett erfolgen, in welches die zu belotenden Teile der Struktur eingetaucht werden. Auch das Einblasen von Lotpulver oder vergleichbare Verfahren finden Anwendung.

Die gewünschte sehr geringe und sehr präzise Dosierung von Lotpulver in den gewünschten Bereichen kann auf diese Weise eingehalten werden, wobei sich z. B. für ein Nickel-Basislot in einer vorzugsweise monopartikularen Schicht ein Auftragsgewicht von etwa 0,03 g bis 0,04 g pro Quadratzentimeter ergibt.

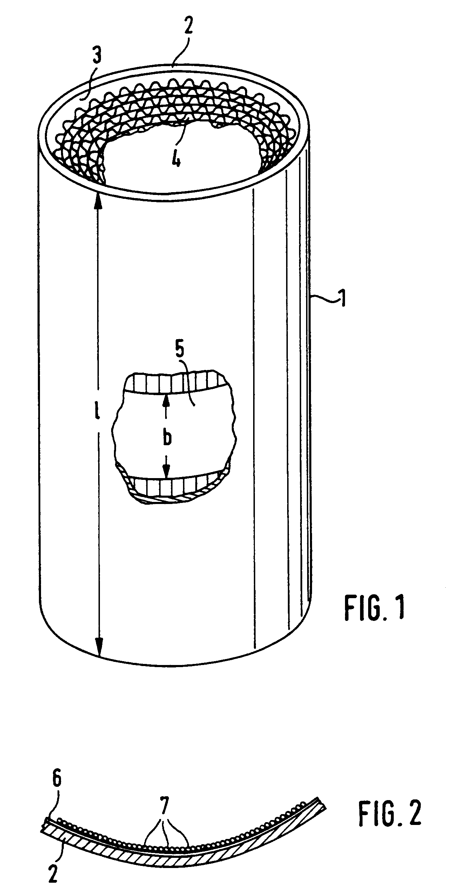

Das erfindungsgemäße Verfahren wird anhand eines Ausführungsbeispiels, auf das die Erfindung jedoch nicht beschränkt ist, unter Bezugnahme auf die Figuren 1 und 2 näher erläutert. Es zeigen:
- Fig. 1: eine schematische, perspektivische, teilweise aufgebrochene Ansicht eines Katalysator-Trägerkörper und
- Fig. 2: einen Teilquerschnitt durch ein belotetes Mantelrohr eines solchen Körpers.

Fig. 1 zeigt einen Katalysator-Trägerkörper (1) mit einem Mantelrohr (2), dessen Innenseite (3) in einem Bereich (5) der Breite (b) mit dem erfindungsgemäßen Verfahren belotet wird. Nach der Belotung kann der eigentliche Wabenkörper (4) aus einer Vielzahl strukturierter Blechlagen eingesetzt werden. Wie Fig. 2 veranschaulicht, wird das Mantelrohr (2) beim Beloten mit einem klebrigen Material (6) versehen, auf dem eine Schicht Lotpulver (7) haften bleibt. Nach dem Zusammensetzen des Wabenkörpers (1) kann dieser ohne Verlust des bereits aufgebrachten Lotpulvers thermisch behandelt, z. B. entfettet werden bei Temperaturen von 180° C oder höher, wodurch eine anschließende Belotung z. B. der Stirnseiten der Wabenstruktur (4) nach einem anderen Belotungsverfahren und/oder mit einem anderen Lot erfolgen kann. Durch die Verwendung noch nicht entfetteter oder besonders eingefetteter strukturierter Bleche kann der Herstellungsprozeß insgesamt vereinfacht und beschleunigt werden und es können unterschiedliche Lote und Belotungsverfahren für die unterschiedlichen sich stellenden Verbindungsaufgaben verwendet werden.

## Patentansprüche

1. Verfahren zum Beloten einer metallischen Struktur (2, 4), wobei ein klebriges Material (6) auf die Struktur (2, 4) oder Teilbereiche (5) davon aufgetragen und anschließend Lotpulver (7) aufgebracht wird, welches an dem klebrigen Material (6) haften bleibt,
dadurch gekennzeichnet,
daß das klebrige Material (6) seine Haftfähigkeit bis zu Temperaturen von mindestens 180°C, vorzugsweise über 200°C, beibehält, und daß nach dem Auftrag des Lotpulvers (7) aber vor dem eigentlichen Lötprozeß ein thermisches Entfetten nicht oder noch nicht beloteter Strukturteile (4), durchgeführt wird, ohne daß das Lotpulver (7) dabei oder bei anschließenden Handhabungsschritten herausfällt.

2. Verfahren nach Anspruch 1, dadurch gekennzeichnet, daß die metallische Struktur (2, 4) Teil eines metallischen Wabenkörpers (1), insbesondere eines Katalysator-Trägerkörpers oder eines Wärmetauschers, ist.

3. Verfahren nach Anspruch 1 oder 2, dadurch gekennzeichnet, daß die metallische Struktur (2, 4) das Mantelrohr (2) eines Wabenkörpers (1) ist, der eine Vielzahl zumindest teilweise strukturierter Blechlagen (4) enthält.

4. Verfahren nach Anspruch 3, dadurch gekennzeichnet, daß auf das Mantelrohr (2)auf seiner Innenseite (3) in mindestens einem streifenförmigen, etwa entlang des Innenumfanges verlaufenden Bereich (5) das klebrige Material (6) und das Lotpulver (7) aufgetragen werden.

5. Verfahren nach Anspruch 4, dadurch gekennzeichnet, daß der Auftrag des klebrigen Materials (6) mittels einer Filzrolle, einem offenporigen Gummi oder einer schwammartigen Vorrichtung erfolgt.

6. Verfahren nach Anspruch 4 oder 5, dadurch gekennzeichnet, daß jeder streifenförmige Bereich (5) eine Breite (b) von 15 bis 25 mm hat, vorzugsweise etwa 20 mm.

7. Verfahren nach Anspruch 4, 5 oder 6, dadurch gekennzeichnet, daß bei einem Mantelrohr (2) mit einer axialen Länge (1) von mehr als 90 mm mindesten drei streifenförmige Bereiche (5) belotet werden.

8. Verfahren nach einem der Ansprüche 4, 5, 6 oder 7, dadurch gekennzeichnet, daß der oder die streifenförmige(n) Bereich(e) (5) mit Abstand von den Stirnseiten des Mantelrohres (2) angebracht wird bzw. werden.

9. Verfahren nach einem der vorhergehenden Ansprüche, dadurch gekennzeichnet, daß das klebrige Material (6) vor der thermischen Behandlung getrocknet wird, um leicht flüchtige Bestandteile zu entfernen.

10. Verfahren nach einem der vorhergehenden Ansprüche, dadurch gekennzeichnet, daß das klebrige Material (6) Polvinylmethylether ist.

11. Verfahren nach Anspruch 10, dadurch gekennzeichnet, daß der Polyvinylmethylether in einer wässrigen Lösung von 2-6 %, vorzugsweise etwa 4 % verarbeitet wird.

12. Verfahren nach einem der vorhergehenden Ansprüche, dadurch gekennzeichnet, daß das Lotpulver (7) Körner mit Korngrößen von etwa 50 bis 130 µ, vorzugsweise etwa 63 bis 125 µ, enthält.

13. Verfahren nach einem der Ansprüche 3 bis 10, dadurch gekennzeichnet, daß nach dem Aufbringen des Lotpulvers (7) strukturierte Blechlagen (4) in das Mantelrohr (2) geschoben werden und anschließend die thermische Behandlung erfolgt.

14. Verfahren nach einem der vorhergehenden Ansprüche, dadurch gekennzeichnet, daß das Aufbringen des Lotpulvers (7) in einem Wirbelbett erfolgt, in welches die Struktur (2) zumindest teilweise eingetaucht wird.

15. Verfahren nach einem der vorhergehenden Ansprüche, dadurch gekennzeichnet, daß das Lotpulver (7) in einer dünnen, vorzugsweise monopartikularen Schicht, aufgetragen wird, z. B. bei einem Nickelbasislot in einem Gewicht von etwa 0,03 bis 0,04 g/cm².

## Claims

1. A method of solder coating a metallic structure (2, 4), wherein an adhesive material (6) is applied to the structure (2, 4) or portions (5) thereof and then solder powder (7) is applied, which remains adhering to the adhesive material (6), characterized in that the adhesive material (6) retains its adhesiveness at up to temperatures of at least 180°C, preferably over 200°C, and that after application of the solder powder (7) but prior to the actual soldering process thermal degreasing of structure parts (4) which are not or not yet solder coated is effected, without the solder powder (7) falling out in that operation or in subsequent handling steps.

2. A method according to claim 1 characterized in that the metallic structure (2, 4) is part of a metallic honeycomb body (1), in particular a catalyst carrier body or a heat exchanger.

3. A method according to claim 1 or claim 2 characterized in that the metallic structure (2, 4) is the casing tube (2) of a honeycomb body (1) which contains a plurality of at least partially structured sheet metal layers (4).

4. A method according to claim 3 characterized in that the adhesive material (6) and the solder powder (7) are applied to the casing tube (2) on its inside (3) in at least one strip-like region (5) extending approximately along the inside periphery.

5. A method according to claim 4 characterized in that application of the adhesive material (6) is effected by means of a felt roller, an open-pore rubber or a sponge-like device.

6. A method according to claim 4 or claim 5 characterized in that each strip-like region (5) is of a width (b) of 15 to 25 mm, preferably about 20 mm.

7. A method according to claim 4, claim 5 or claim 6 characterisd in that in the case of a casing tube (2) with an axial length (1) of more than 90 mm at least three strip-like regions (5) are solder coated.

8. A method according to one of claims 4, 5, 6 and 7 characterized in that the strip-like region or regions (5) is or are disposed at a spacing from the ends of the casing tube (2).

9. A method according to one of the preceding claims characterized in that the adhesive material (6) is dried prior to the thermal treatment in order to remove easily volatile constituents.

10. A method according to one of the preceding claims characterised in that the adhesive material (6) is polyvinyl methylether.

11. A method according to claim 10 characterized in that the polyvinyl methylether is processed in an aqueous solution of 2 to 6 %, preferably about 4%.

12. A method according to one of the preceding claims characterized in that the solder powder (7) contains grains of grain sizes of about 50 to 130 µ, preferably about 63 to 125 µ.

13. A method according to one of claims 3 to 10 characterized in that after application of the solder powder (7) structured sheet metal layers (4) are pushed into the casing tube (2) and then the thermal treatment is effected.

14. A method according to one of the preceding claims characterized in that application of the solder powder (7) is effected in a fluidized bed in which the structure (2) is at least partially immersed.

15. A method according to one of the preceding claims characterized in that the solder powder (7) is applied in a thin, preferably monoparticular layer, for example in the case of a nickel-base solder with a weight of about 0.03 to 0.04 g/cm².

## Revendications

1. Procédé de brasage tendre d'une structure métallique (2, 4), une matière adhésive (6) étant appliquée sur la structure (2, 4) ou sur des zones partielles (5) de celle-ci et du métal d'apport en poudre (7) étant ensuite déposé, qui adhère à la matière adhésive (6),
caractérisé en ce que
la matière adhésive (6) conserve sa propriété adhésive jusqu'à des températures d'au moins 180 °C, et de préférence au-delà de 200 °C, et en ce que, après le dépôt de métal d'apport en poudre (7), mais avant l'opération de brasage proprement dite, un dégraizsage thermique est effectué sur des parties de structure (4) non brasées ou encore non brasées sans que le métal d'apport en poudre (7) ne risque de tomber à ce moment ou lors d'étapes de manipulation suivantes.

2. Procédé selon la revendication 1, caractérisé en ce que la structure métallique (2, 4) fait partie d'un corps alvéolaire métallique (1), notamment d'un support de catalyseur, ou d'un échangeur de chaleur.

3. Procédé selon la revendication 1 ou 2, caractérisé en ce que la structure métallique (2, 4) est le tube enveloppe (2) d'un corps alvéolaire (1), qui contient une pluralité de couches de tôles (4) au moins en partie structurées.

4. Procédé selon la revendication 3, caractérisé en ce que la matière adhésive (6) et le métal d'apport en poudre (7) sont appliqués sur la face intérieure (3) du tube enveloppe (2), en au moins une zone (5) en forme de bande, qui s'étend à peu près sur la circonférence intérieure.

5. Procédé selon la revendication 4, caractérisé en ce que l'application de la matière adhésive (6) s'effectue au moyen d'un rouleau en feutre, d'un caoutchouc à pores ouverts ou d'un dispositif du type éponge.

6. Procédé selon la revendication 4 ou 5, caractérisé en ce que chaque zone en forme de bande (5) a une largeur (b) comprise entre 15 et 25 mm, et de préférence d'environ 20 mm.

7. Procédé selon la revendication 4, 5 ou 6, caractérisé en ce que, dans le cas d'un tube enveloppe (2) ayant une longueur axiale (1) supérieure à 90 mm, au moins trois zones en forme de bande (5) sont appliquées.

8. Procédé selon l'une des revendications 4, 5, 6 ou 7, caractérisé en ce que la ou les zone(s) en forme de bande(s) (5) est ou sont appliquée(s) à partir des côtés frontaux du tube enveloppe (2).

9. Procédé selon l'une des revendications précédentes, caractérisé en ce que la matière adhésive (6) est séchée avant le traitement thermique afin d'éliminer des constituants facilement volatils.

10. Procédé selon l'une des revendications précédentes, caractérisé en ce que la matière adhésive (6) est du polyvinylméthyléther.

11. Procédé selon la revendication 10, caractérisé en ce que le polyvinylméthyléther est utilisé dans une solution aqueuse de 2 à 6 %, de préférence d'environ 4 %.

12. Procédé selon l'une des revendications précédentes, caractérisé en ce que le métal d'apport en poudre (7) contient des grains ayant une grosseur de grain comprise entre environ 50 et 130 µ, et de préférence d'environ 63 à 125 µ.

13. Procédé selon l'une des revendications 3 à 10, caractérisé en ce que, après l'application du métal d'apport en poudre (7), des couches de tôles structurées (4) sont glissées dans le tube enveloppe (2) et en ce que le traitement thermique est effectué ensuite.

14. Procédé selon l'une des revendications précédentes, caractérisé en ce que l'application du métal d'apport en poudre (7) s'effectue dans un lit fluidisé turbulent, dans lequel la structure (2) est plongée, du moins en partie.

15. Procédé selon l'une des revendications précédentes, caractérisé en ce que le métal d'apport en poudre (7) est appliqué en une couche mince, de préférence monoparticulaire, par exemple, pour un métal d'apport à base de nickel, en un poids d'environ 0,03 à 0,04 g/cm².
